# EUROPEAN PATENT SPECIFICATION

(11) **EP 4 408 051 B1**
(45) Date of publication and mention of the grant of the patent: **14.01.2026**
(21) Application number: 23153462.9
(22) Date of filing: 26.01.2023
(51) Int. Cl.: H04W 4/40, H04W 12/041, H04W 12/0431, H04W 4/90, H04W 12/03, H04W 84/06, H04W 12/033, H04M 3/51

(54) **SECURE TRANSMISSION OF A MESSAGE FROM A SENDER TO A RECEIVER BY MEANS OF A NON-TERRESTRIAL COMMUNICATION LINK**
SICHERE ÜBERTRAGUNG EINER NACHRICHT VON EINEM ABSENDER ZU EINEM EMPFÄNGER MITTELS EINER NICHTTERRESTRISCHEN KOMMUNIKATIONSVERBINDUNG
TRANSMISSION SÉCURISÉE D'UN MESSAGE D'UN ÉMETTEUR À UN RÉCEPTEUR AU MOYEN D'UN LIEN DE COMMUNICATION NON TERRESTRE

(43) Date of publication of application: 31.07.2024
(73) Proprietor: Deutsche Telekom AG, 53113 Bonn (DE)
(72) Inventor: Büchter, Martin, Troisdorf (DE); Lauster, Reinhard, St. Pölten (AT)
(74) Representative: Braun-Dullaeus Pannen Emmerling Patent- & Rechtsanwaltspartnerschaft mbB

(56) References cited:
- US-A1- 2007 060 097
- US-A1- 2014 045 450
- US-A1- 2017 374 538
- "3rd Generation Partnership Project; Technical Specification Group Services and System Aspects; Release 17 Description; Summary of Rel-17 Work Items (Release 17)", no. V17.0.1, 16 January 2023 (2023-01-16), pages 1 - 167, XP052235223, Retrieved from the Internet <URL:https://ftp.3gpp.org/Specs/archive/21_series/21.917/21917-h01.zip 21917-h01.docx> [retrieved on 20230116]

## Description

The invention relates to a method, a communication system, a sender and a message for secure transmission of a message from a sender to a receiver by means of a communication link.

The progressive digitization and networking of services and the operation of user terminals has resulted in an increasing dependence on networks, especially wireless networks. These radio networks are required to provide and/or operate the services and/or the user terminals. As a result, the availability of radio networks is essential, especially for critical services, i.e., those that should be always available.

In most cases, the radio access network (RAN) is provided by network providers by means of base stations on the earth's surface - such radio networks are also referred to as terrestrial networks. However, it can happen that these radio networks on the earth's surface fail completely, for example due to environmental events in an area, or that not all areas are covered by such base stations located on the earth's surface.

So-called NTNs (None Terrestrial Networks) can be considered, at least in support of such services and/or user terminals. These are radio networks whose transceivers are not located on the earth's surface, for example in drones, high altitude platforms and/or satellites.

Such NTN networks are currently a very hot topic, which are discussed with strong interest in various standardization bodies, by national regulatory authorities and by network operators. In particular, NTNs can also be used to operate emergency calls and/or so-called eCalls in the event of a failure of the radio networks located on the earth's surface.

The challenges here include the following: it cannot be safely assumed that the core network of an operator of an NTN network located on the surface of the earth is in the same sovereign territory in which the IMS eCall was placed, so that the communication must still be transferred, at least in part, to another network operator of the sovereign territory, which is authorized to forward eCalls to the responsible emergency call centers.

IMS are packet switched calls that are processed by the IP multimedia subsystem. Within the context of this description, term eCalls shall also comprise emergency calls, wherein typically emergency calls are related to voice calls. A typical eCall transmits further "data" information, like position etc. Typically, networks are configured to recognize that an incoming signal is an eCall in order to process it accordingly. In addition, regulated emergency calls and therefore eCalls from abroad are generally prohibited for good reasons. One of the main reasons is that regulated emergency calls or eCalls originated in a sovereign territory are operated in the same sovereign territory to be able to guarantee help in emergencies as quickly as possible and not to interfere policies in a different country. A call from abroad would therefore cause problems with regarding the requirement of locality for emergency calls or e Calls.

Data security is also important for messages of a different nature than IMS eCalls for many reasons.

US 2017/374538 A1 discloses a method for securely transmitting a message from a sender to a receiver by means of a communication link comprising, at least in part, a non-terrestrial data link of a third-party communication provider.

Accordingly, it is an object of the invention to provide suitable technical measures to enable data security for messages (eMessages) transmitted at least in part over an NTN network. In particular, it is the task of the invention to provide suitable technical measures to provide for regulated emergency calls and/or eCalls transmitted at least partially over an NTN network the privileges as provided for conventional emergency calls (e.g. 112, 110, 911, or equally privileged numbers).

This object is solved by the features of the independent claims.

The features of the various aspects of the invention described below or the various examples of implementation may be combined with each other unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

According to a first aspect of the invention, a method is disclosed for securely transmitting a message from a sender to a receiver using a communication link. The communication link comprises, at least in part, a non-terrestrial data link of a third-party non-terrestrial communication operator. In the context of the present invention, a non-terrestrial data link can be understood to be a IMS signaling and/or a data transmitted to a receiving unit, in particular a transceiver unit, which is not located on the ground. Thus, the receiver unit, in particular the transceiver, may be a drone, high altitude platform and/or satellite. The method comprises the following steps:
- Generating a message by the sender, the message having at least information about a termination point of the message and payload data;
   ∘ the message can be a SIP signaling message to initiate an IMS eCall; SIP Messages typically already can comprise encrypted parts (emergency calls). It is one possible aspect of the new ideas presented to add new data, like payload, to this already existing SIP protocol (eCall) and to encrypt this added data at least in parts;
   ∘ the information of the termination point can be provided, for example, in a header of the message. In abstract terms, the termination point specifies a location where the message is to arrive. At the termination point, the message can be forwarded and/or processed. The payload data provide in particular the data, which are needed for the execution of a service and/or other actions by means of the message. More generally, the payload data may be data of any type, such as: Sensor information, image data, video data, status information, user input data, data related to an eCall (i.e. MSD) emergency call, etc. The message may be manually generated by a user and/or automated by the sender. The receiver can be another person and/or a service in a connected to a communication network. The service in a data network, may be a local emergency call center or a service of a communication provider (like a PSAP).
- Partial encryption of the message by the sender using a first key, leaving at least the termination point information unencrypted;
   ∘ the sender may have a universal integrated circuit card (UICC) and/or an embedded-SIM (eSIM) assigned to a home network operator. In a broader sense this means that the sender has a subscription with a service provider, wherein the service provider can be the home network operator. When the text states that the sender has a SIM and/or an eSIM of a communications operator that means that the sender has such a subscription with his home network operator. Such a service subscription enables mobile communication for the sender, in particular also via the non-terrestrial data link of the third-party non-terrestrial communications operator.
   ∘ Typically, communication between a sender and its home network operator is encrypted via the communications network of the communications operator in such a way that data security is at least ensured as long as the message does not leave the network operated by the home network operator. This data security is important, for example, to prevent tampering, to ensure data protection, so that certain services can be guaranteed, or to grant certain privileges to a communication.
   o the previous communication links known from the prior art, which include at least one non-terrestrial data link of a foreign third-party non-terrestrial communication provider, take place disadvantageously unencrypted. This is also because complete encryption would result in the third-party non-terrestrial communication provider of the non-terrestrial data link otherwise being technically unable to forward the message to the correct destination. As a result, the message can be viewed and/or manipulated on its way to the receiver.
   ∘ The selective or partial encryption, in particular of the payload, proposed in the context of the present invention, now makes it possible for the foreign non-terrestrial communication provider to forward the message to the correct destination, in particular to the termination point, and data security is still ensured, since the user data is encrypted.
   ∘ the first key and the second key described below may in particular be a different key pair than the key pair that the home network operator of the SIM and/or eSIM Card normally provides to the sender;
   o the key pair can be stored in particular on the SIM and/or the eSIM of the sender;
- Sending the encrypted message by means of the sender via the non-terrestrial data link to a non-terrestrial transceiver of the third-party non-terrestrial communication operator, the non-terrestrial transceiver forwarding the message to the core network of the third-party non-terrestrial communication operator;
   ∘ the message is suitably designed to be received by the non-terrestrial transceiver. The message may be a SIP message.
- Forwarding the message to the termination point, with a second key held at the termination point for decryption;
   ∘ the message can be forwarded directly from the non-terrestrial communications provider to the termination point or can traverse networks of various terrestrial communications providers on its way to the termination point, in particular the network of the communications provider of the SIM and/or eSIM card. In particular, the termination point can also be located within the core network of the communications operator of the SIM and/or eSIM card.
- At least partial decryption of the message at the termination point by the second key.
   ∘ The second key reserved at the termination point enables the message to be encrypted and, in particular, the content of the payload data to be evaluated and used accordingly.

Thus, the invention offers the advantage that, for a communication link having at least a section of a non-trusted non-terrestrial data link, end-to-end encryption can be efficiently implemented between the sender and the receiver, so that data protection and/or tamper-resistance of the message are enabled. It is also possible to encrypt a message (answer) from the receiver to the sender accordingly.

If it can now be assumed that the message has not been tampered with or read out, this can be the prerequisite for certain services to be operated and/or certain privileges to be granted to the message. If the message is an IMS eCall emergency call, for example, it can be forwarded to a local PSAP (public safety access point) with a higher priority or according to other locally applicable requirements or privileges.

In one embodiment, the termination point addresses a communication address of the receiver and/or addresses a communication address of a message processing unit of the home network operator or a service provider. In particular, the message processing unit is associated with the home network operator to which the SIM and/or eSIM of the sender is associated. The message processing unit may be functionally installed as an algorithm on a server.

If the termination point is the communication address of the receiver, this has the technical advantage that the message is decrypted for the first time at its destination, so that computing resources are saved in this respect if the receiver is assigned to a further data network. On the other hand, this requires the home network operator who manages the keys to communicate at least the second key to the receiver.

If the message relates to a service that is provided by the core network of the home network operator, then the latter is also the receiver and the message is terminated, decrypted and evaluated on the corresponding message processing unit of the home network operator. Since the home network operator can generate the key pairs, as will be described below, the home network operator also has the corresponding second key to decrypt the message. However, the home network operator can also decrypt the message first by means of its message processing unit and then forward it to the actual receiver, in particular encrypted by another key pair. In this context, it is possible that the first key pair consumes more resources in terms of computing, so it is advantageous to provide for decryption within the core network of the home network operator.

In one embodiment, the home network operator generates, manages, updates and/or distributes the keys, in particular the key pairs.

In the case of eCalls, this has the advantage that the home network operator, who is responsible for forwarding the eCalls to the appropriate PSAPs, has control over the encryption and can thus ensure that the message can be both securely transmitted and decrypted at the appropriate correct points in the network so that they are readable by the PSAPs or so that an eCall communication can be established.

The home network is the operator for the sender, whom the sender trusts and who provides the communication for the sender and offers the corresponding service. For this reason, it is advantageous that the home network operator is also able to decrypt the message at any time.

The first and second keys can be symmetric keys. However, it is also possible to provide the first key as a public key and the second key as a private key. The home network operator can communicate the second key to the receiver so that it can decrypt the message as a termination point.

In one embodiment, the communication address of the termination point is explicitly specified. However, it is also possible to determine the communication address of the termination point from location data of the sender, from an IMSI, an MSIDN, and/or a SIP.

If the communication address of the termination point is explicitly specified, the message can be forwarded to the receiver in a targeted manner. In addition, it is possible for the home network operator who manages the keys to read out the communication address of the termination point and then send the second key to the receiver in a targeted. It is also possible to determine the home network operator and to forward the message to this operator. If the message relates to an emergency call, the home network can determine to which responsible emergency call center the eCall should be forwarded by performing a corresponding comparison with a database. For this purpose, the location data in particular can be sent unencrypted in the eCall. The location data reflects the position of the sender, which the sender can determine periodically, for example, by evaluating satellite signals, for example from the GNSS system.

In one embodiment, the entire message and/or the termination point information is transmitted in a tamper-resistant manner. This can be performed by using a hash and/or a blockchain method. In particular, the hash is only applied to the not-encrypted parts of the message. The hash-value can be used to perform an integrity check by the receiver.

This offers the advantage that this information can be read, which is necessary for correct forwarding to the intended termination point, but that at the same time it can be determined if the message has been changed. For example, if a termination point presents a change, it can reject the message so that the termination point is not overloaded, for example, if this is the target of a cyberattack. The information about the termination point could, for example, be transmitted in a tamper-proof manner using a hash method and/or a blockchain method.

In one embodiment, the message processing unit of the home network operator forwards the message to the receiver in encrypted form. In this case, the message processing unit can in particular be the termination point that decrypts the message and evaluates, for example, to which locally responsible emergency call center or which receiver the message should be forwarded. Especially in the case of eCalls, a vehicle has no knowledge about the local responsible PSAP, so that usually the message processing unit, which is designed as an IMS (IP multimedia subsystem), extracts the responsible PSAP based on the location data in the message in a database, especially a PSAB GEO DB, and forwards the eCall, especially with defined privileges, to the responsible PSAP. To ensure tampering and data security, the forwarded message is again encrypted. In principle, this can again be done with the first key and in the second key. Alternatively, a new key pair can be exchanged between the responsible emergency call center and the home network operator. In this sense, the new key pair can be referred to as the third and fourth keys, whereby the third and fourth keys can in turn be symmetric or asymmetric keys.

If the message is the eCall emergency call, then typically the case is that at least one terrestrial communication operator is present and set up to forward incoming eCall emergency calls to the locally responsible PSAP. In the text of the present invention, this locally responsible communications operator is called the home network operator. This home network operator evaluates location information from the sender to determine the emergency call center responsible for the corresponding emergency call. The caller is then forwarded to this emergency call center, i.e., the PSAP, accordingly. For this purpose, the corresponding location information is either transmitted unencrypted in the eCall and/or decrypted by the home network operator using the second key. The home network operator can then look up in a database, a so-called PSAP GEO DB, which emergency call center is responsible for the region corresponding to the location information and forward the eCall accordingly.

In one embodiment, the message is an eCall or an emergency call comparable to the eCall. The type of message can be made known to the home network operator, for example, by means of a separate protocol and/or corresponding information in the header. This information can be transmitted encrypted or unencrypted. If this information is transmitted unencrypted, the operator of the non-terrestrial network can already grant certain privileges to the message so that it can be forwarded quickly, reliably and securely to the responsible emergency call center. If information is transmitted unencrypted, the home network operator as the first termination point at the latest can provide the appropriate privileges in the form of network resources and for the eCall. For example, location data manipulation can be transmitted securely but unencrypted so that the home network operator can forward the eCall to the responsible emergency call center as quickly as possible.

In one embodiment, the message comprises information about the type of message, wherein this information about the type of message is sent in particular unencrypted.

As explained above in other words, this offers the advantage that the home network operator can allocate appropriate computer resources to the message and process the message according to its message type.

In one embodiment, the sender is a vehicle, smartphone, smartwatch. The vehicle can be a car, a bicycle, a truck, an airplane, a ship or any other vehicle. The smartphone and or smartwatch as a sender, have the advantage that their sensors can now also detect accident events quite reliably and can be flexibly taken by a user to different vehicle. In addition, messages other than eCalls can also be sent to the receiver via the smartphone and/or smartwatch.

**In** one embodiment, the receiver is the responsible emergency call center. **In** this case, it is particularly advantageous not to lose any time and to use the non-terrestrial communication link to send the eCall so that no time is lost, and rescue forces can be sent to the scene of the accident as quickly as possible.

**In** one embodiment, multiple local key pairs are provided to the sender in advance, each from a different local home network. **In** addition, or alternatively, the local responsible home network in which the sender is located is determined and the corresponding local keys are transmitted to the sender.

This has the advantage that the sender always has the correct key pair when the sender moves from one home network to the area of another home network, since, as already described above, each responsible emergency call center is served by its own home network. This therefore enables emergency calls to be encrypted and also decrypted in a data-secure manner even when crossing borders.

According to a second aspect of the invention, there is provided a message, in particular a message signal that can be a SIP message, the message being adapted for secure transmission to a receiver by means of a communication link, the communication link comprising at least in part a non-terrestrial data link, the message being adapted for reception by a non-terrestrial transceiver, the message comprising information about a termination point of the message and payload data, the message being partially encrypted, wherein at least the information about the termination point is unencrypted.

This message according to the invention essentially has the technical advantages already described in connection with the method according to the invention.

According to a third aspect of the invention, a sender is disclosed, wherein the sender is arranged to securely transmit a message to a receiver using a communication link. The communication link comprises, at least in part, a non-terrestrial data link. The sender comprises:
- a processor adapted to generate a message for a non-terrestrial transceiver, the message comprising information about a termination point of the message and payload data;
   ∘ For this purpose, the message may be embedded in a protocol intended for the non-terrestrial transceiver;
- an encryption algorithm, in particular implemented on the processor, wherein the encryption algorithm is arranged to encrypt the message while leaving at least the termination point information unencrypted;
   ∘ in particular, the message is encrypted with the first key;

   - an antenna set up for sending the message to the non-terrestrial transceiver.
      ∘ The message can be sent as a beacon with increased signal strength to reach the non-terrestrial transceiver. The message can be sent in a frequency band intended for communication with the non-terrestrial transceiver.

Advantageously, this sender according to the invention enables the message according to the invention to be sent.

According to a fourth aspect of the invention, a service provider, in particular the home network operator, is disclosed, wherein the service provider is arranged to securely transmit a message from a sender to a receiver using a communication link. The communication link comprises, at least in part, a non-terrestrial data link. The communication operator can comprise:
- a functional server unit adapted to generate a key pair for the message according to the invention and to distribute a first key of the key pair to the receiver and a second key of the key pair to the termination point.
- a message processing unit of a service provider configured to decrypt and/or to forward the message.

According to a fifth aspect of the invention, a communication system for securely transmitting the invention according to message from the sender to the receiver using the communication link is disclosed. The communication system is arranged for carrying out the method according to the invention. In particular, the combination system comprises the sender, the network operator and/or the receiver.

In the following, preferred implementation examples of the present invention are explained with reference to the accompanying figure:
- Fig. 1:: shows a communication system according to the invention.
- Fig. 2:: shows a method according to the invention.
- Fig. 3:: shows a message according to the invention
- Fig. 4:: shows a further embodiment of the message according to the invention.

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

At the beginning, some technical terms are explained, which may appear in the text below.

IP multimedia subsystem (IPMS) is the technology defined to provide IP multimedia services over mobile communication networks. IP multimedia subsystem provides key features to enrich the end-user person-to-person communication experience through the integration and interaction of services. IMS allows person-to-person (client-to-client) as well as person-to-content (client-to-server) communications over an IP-based network. The IMS makes use of the Session Initiation Protocol (SIP) and Session Description Protocol (SDP) to set up and control calls or sessions between user terminals or mobile communication devices (or mobile communication devices and application servers). When an emergency call is made to an emergency center such as a public safety answering point (or public safety access point) - hereinafter also called PSAP - special procedures are applied to ensure that the call is correctly routed and, if possible, not interrupted.

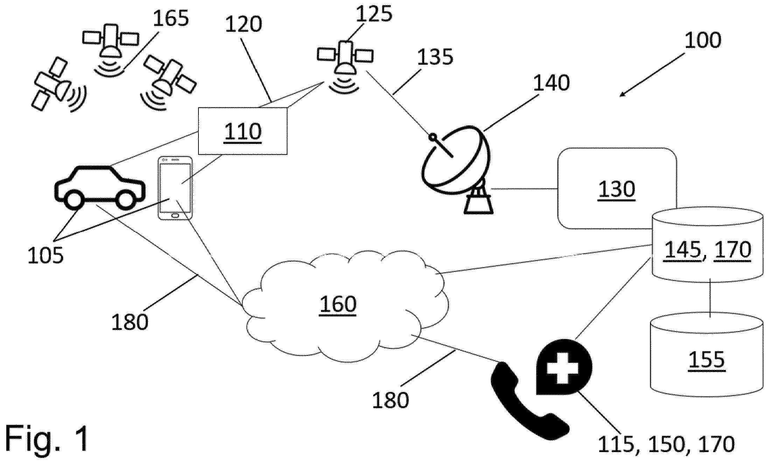

Fig. 1 shows a communication system 100 according to the invention. A sender 105 transmits a message 110, in particular an eCall emergency call 110, to a receiver 115 by means of a communication link. The communication link comprises a first non-terrestrial data link 120, which is used to transmit the message 110 to a non-terrestrial receiver 125. This first non-terrestrial data link 120 may be formed as a user link 120.

The non-terrestrial receiver 125 may be a drone 125 or a satellite 125. The non-terrestrial receiver 125 belongs to the network 130 of a third-party network operator, in particular the network 130 of a non-terrestrial third-party network operator.

By means of a second non-terrestrial data link 135, the message is transmitted from the non-terrestrial receiver 125 to a ground station 140. The second non-terrestrial data link 135 may be a "feeder link" 135. From the ground station 140, the message is transmitted to the network 130 of the third-party network operator.

The foreign third-party network operator in turn passes the message 110 on to a message processing unit 145 of a home network operator 160 to which a SIM or an eSIM of the receiver is assigned or to a responsible emergency call center 150 that is assigned to the home network operator 160. Thus, in one embodiment, the receiver 115 may correspond to the responsible PSAP 150. The home network operator 160 is designed to generate key pairs and to distribute them to the sender 105 and/or to the receiver 115 via secure communication paths 180.

In the case of the emergency call message 110, an IPMS unit 145 as a message processing unit 145 of the home network 160 compares location data of the emergency call with a database 155, in particular a PSAP GEO DB 155, to determine the correct associated PSAP 150. The location data of the eCall 110 may be determined by the receiver 105, for example, by receiving satellite signals 165.

If the receiver 115 is not a responsible PSAP but, for example, a service of the home network operator 160 or of a third party service in another data network, the communication address of the receiver 115 can be specified directly in the message and does not have to be determined first by matching with the PSAP GEO DB 155 database.

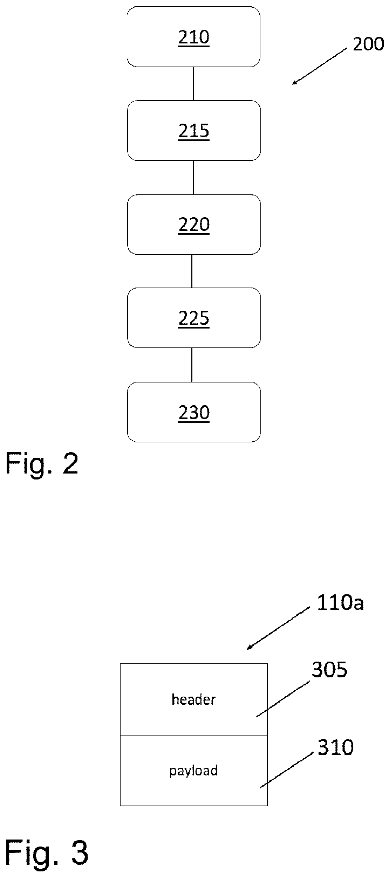

The flow of the invention can now be illustrated by the flowchart shown in Fig. 2. Fig. 2 shows a method 200 according to the invention, which is executed in the communication system 100.

Is the aim of the method to enable the message 110 to be transmitted in a data-secure and tamper-proof manner to the receiver 115, in particular to the relevant emergency call center 150. To this end, the method 200 comprises the following steps:
Step 210: Generating the message 110 by the sender 105, wherein the message 110 includes at least information about a termination point 170 of the message 110 and payload data. The termination point 170 is an address in the communication system 100 at which the message 110 arrives, is read, is decrypted, and/or is processed. Preferred possible termination points 170 in the communication system 100 are the receiver 115, the responsible emergency call center 150, and/or the message processing unit 145 of the home network operator 160.

Step 215: Partially encrypting the message 110 by the sender 105, leaving at least the information about the termination point 170 unencrypted. This enables the message 110 to be sent to the termination point 170 by means of the communication system 100 without the message 110 having to be decrypted for this purpose. In the case of the emergency call, this can be implemented as follows, for example: The path of the signaling of the emergency call can be used as information about the termination point 170. I.e. an "IMS call" (for emergency calls) is initiated e.g. with an "invite SIP message" and in this (or in other "SIP" messages associated with this "SIP session") the encrypted data set (i.e. MSD) is included. Thus, the data set is routed via the same IMS signaling points (with the corresponding IMS addressing) - up to the PSAP.

Step 220: Sending the encrypted message 110 by means of the sender 105 via the non-terrestrial data link 120 to the non-terrestrial transceiver 125 of the foreign operator, the non-terrestrial transceiver 125 forwarding the message 110 to the network 130, in particular the core network 130, of the foreign operator.

Step 225: Forwarding the message 110 to the termination point 170, where a second key is held at the termination end point 170 to decrypt the message 110.

Step 230: At least partially decrypting message 110 at termination point 170.

Thus, the message can be sent end-to-end securely from the sender 105 over the at least partially insecure communications link, allowing the home network operator to always maintain full control over the security of the message.

Fig. 3 shows a first embodiment of the message 110a according to the invention. The message 110a is embedded in a protocol that allows it to be sent over the communication link of the communication system 100. The message 110a has at least one header 305, wherein information about the termination point 170 is preferably written into the header 305. Additionally, the message 110a has payload data 310, also referred to as payload 310.

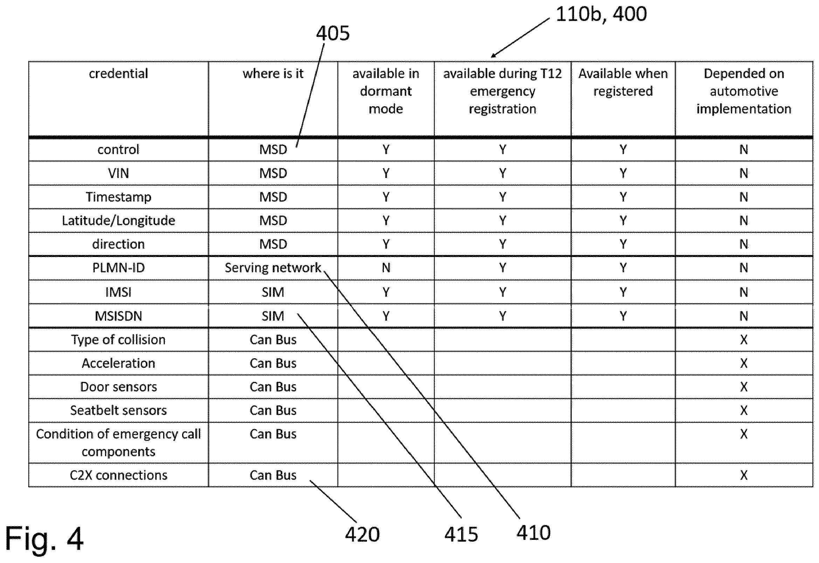

Fig. 4 shows a further embodiment of the message 110b according to the invention. In particular, the message 110b represents a possible embodiment of an eCall emergency call 400. The eCall 400 comprises data of the MSD 405, the "serving network" 410, the SIM or the eSIM card 415 and data of the "CAN bus" 420. In Fig. 4, the "Y" has the meaning of yes, the "N" has the meaning of no and the "X" has the meaning of not present.

The manner in which the key pair or pairs for encrypting and decrypting the message 110 are generated, managed and/or distributed is another aspect of the invention. This task is performed by the home network operator 160 or the communication operator of the SIM or eSIM in the manner described below.

Thus, an important aspect of the invention is to encrypt the message 110 already at the location of the sender 105. In this way, it is ensured that misuse or manipulation of the data set of the message 110 is prevented. In particular, an encryption mechanism managed by the home network operator 160 of the SIM card is proposed. The encryption includes the MSD 405 and/or other fields relevant to data protection, such as the VIN, number of passengers, seat belts, driving direction, etc. In the case of vehicles as senders 105, this task is primarily performed by so-called IVS (in-vehicle systems).

An asymmetric encryption method can be used as the encryption system between IVS and an authorized PSAP, since this usually has a higher security level. Key management is the responsibility of the home network operator, who also has the option of entering protected values on the SIM card or adding and changing them by means of over-the-air (OTA) updates.

### General scenario A)

i) the home network operator 160 determines a first key pair key pair comprising a public key and a private key per sender 105, in particular per IVS. Here, for example, two alternatives are possible:
   Alternative 1: only a first central key pair comprising a public key and a private key for all PSAPs 150 or a symmetric first key pair between the IVS and the PSAP 150 is generated.
   Alternative 2: a central (EU) symmetric key between IVS and PSAP 150.
ii) the authorized PSAP 150 also has or receives a key, where only the public key is known, but not the private key of the PSAP 150.
iii) the home network operator 160 configures on the SIM or eSIM of the sender 105 the private key of the IVS and the public key of the PSAP 160. in this way, it is enabled that not only the communication from the sender 105 to the PSAP 160 can be encrypted, but also the communication from the PSAP 160 to the sender 105.

### Again in other words:

In particular, the following keys may be stored on the SIM of the sender 105: 1) public key of the receiver 115, in particular the PSAP 150 - which is used to enable the sender 105 to encrypt the message for the receiver 115, 2) the private key of the sender 105, which is used to enable the sender 105 to decrypt the message received from the receiver 115.

In particular, in a protected area of the receiver 115, in particular of the PSAP 150, the following keys may be stored: 3) public key of the sender 105 - which is used to enable the receiver 115 to encrypt the message for the sender 105, 4) private key of the receiver 115, which is used to enable the receiver 115 to decrypt the message received from the sender 105.

In particular, the keys can be stored in a protected area of the SIM that can only be edited by the home network operator 160. Alternatively, the update can also be changed or added dynamically (for example, NAS or OTA).

iv) When generating the message 110, the message is encrypted in particular partly. In the case of an eCall 400, the MSD 405 and compared or other parts of the message are encrypted with the public key of the PSAP 150. Alternative: the MSD 405 can be sent except in a "SIP" message for example via SMS. If the MSD 405 is transmitted via SMS, the MSD 405 is encrypted within the SMS.

v) The authorized receiver 115, specifically the authorized PSAP 150, may decrypt the message 110 using its private key. If the PSAP 150 requires the MSD 405 to be sent repeatedly, the MSD 405 shall be encrypted with the sender 105's public key.

This advantageously prevents unauthorized third parties from viewing the data of the message 110.

### Distributed scenario B)

Scenario B may specifically address cases involving a border crossing where the change in the position of the vehicle 105 changes the responsible home network 160 for the PSAP.

Alternatively, or in addition to scenario A), an update of the information on the SIM card of the sender 105 may be performed on a country-specific basis and the IVS of the vehicle 105 and the PSAP 150 receive current key pair only as described in scenario A).

Here, it can be provided that the IVS of the vehicle 105 recognizes the country in which the vehicle 105 is located on the basis of broadcast identifiers (for example, MCC of the PLMNID) and/or GNNS information (for example also derived from the MSD) and sends an update request via NAS or SMS to obtain the locally valid key of the corresponding home network. Alternatively, the SIM may be provided and store the corresponding home network operator key pairs for multiple countries in advance. However, it is also possible for the IVS to obtain the appropriate country-specific key pair according to the localization from the responsible home network operator 160 immediately before the eCall 400 on the basis of the available geographical information.

The home network operator may periodically infer the location where the vehicle's 105 IVS is located and, upon detecting that the IVS is not in possession of the country-specific key pair, indicates an appropriate update of the key pair to the vehicle 105's SIM card.

Central encryption or decryption of the MSD 405 by the home network operator as scenario C).

In scenario C, the key pair of the receiver 115, in particular the PSAP 150, and the sender 105, in particular the vehicle 105, remains in the network of the home network operator 160 or a secure network instance controlled by it.

The home network operator 160 sends the private key of the IVS and its public key to the IVS. The encryption of the MSD 405 or the partial encryption of the MSD 405 is performed as described in scenario A). In this case, the PSAP 150 cannot decrypt the MSD 405 and must request decryption via the home network operator 160. It therefore follows that in scenario C), another secured connection between the PSAP 150 and the home network operator 160 is required.

In a first embodiment, decryption is performed at the home network operator 160 using defined API and/or provided interfaces. The PSAPs 50 can gain access to the interface via authentication (password, 2FA). In a second variant, the home network operator 160 defines the key pair between the PSAPs 150. This variant offers the advantage that the number of key pairs is limited.

In connection with the invention described above, further advantageous embodiments are possible.

It is possible to generate a so-called hash value of the user data, in particular of the MSD 405, and to sign it by means of the encryption system used. Together with the partial encryption or full encryption of the MSD 405, this makes it possible to send both partially encrypted and partially readable data fields. The advantage is that the readable fields cannot be manipulated unnoticed, since this is made detectable by the hash procedure.

In addition, it is possible to sign the message to ensure authentication of the participants. If the entire asymmetric key pair of a participant is sent by the home network operator. This allows the IVS to encrypt the message with the private key and then additionally sign it using the public key of the PSAPS.

## Claims

1. A method for securely transmitting a message from a sender to a receiver by means of a communication link, the communication link comprising, at least in part, a non-terrestrial data link (120) of a third-party communication provider (130), the method comprising the steps of:
• Generating by a functional server unit of a service provider a key pair for the message and distributing a first key to the receiver and a second key to the termination point;
• Generating a message (110) by the sender (105), the message (110) having at least information about a termination point (145, 115) of the message (110) and payload data (310);
• Partial encryption of the message by the sender (105) using the first key, leaving at least the termination point information unencrypted;
• Sending the encrypted message (110) by means of the sender (105) via a non-terrestrial data link (120) to a non-terrestrial transceiver (125) of a third-party communication operator (130), the non-terrestrial transceiver forwarding the message to the network of the third-party communication operator (130);
• Forwarding the message to the termination point (145, 115), with the second key held at the termination endpoint for decryption;
• At least partial decryption of the message at the termination point (145, 115) using the second key,
wherein the termination point (115, 145) is a communication address of a message processing unit of a home network operator (160),
wherein the message processsing unit of the home network operator (160) forwards the message being an eCall to a local responsible PSAP being a receiver (115, 150, 170) in an encrypted form,
wherein the home network operator evaluates location information from the sender to determine the local responsible PSAP.

2. The method according to claim 1, **characterized in that** the service provider is the home network operator (160) which generates, manages and/or updates the key pairs.

3. The method according to any of claims 1 to 2, **characterized in that** the communication address of the termination point (115, 145) is explicitly specified from location data of the sender (105), from an IMSI, an MSISDN, and/or a SIP URN is determined.

4. The method according to any of the previous claims, **characterized in that** the information about the termination point (115, 145) is transmitted in a tamper-proof manner.

5. The method according to any one of the preceding claims, **characterized in that** the message (110) comprises information about the type of message, wherein said information about the type of message is sent unencrypted.

6. The method according to any of the previous claims, **characterized in that** the sender (105) is a vehicle, in particular a car, a smartphone, and/or a smartwatch.

7. The method according to any of the preceding claims, **characterized in that** the receiver (115, 150, 170) is a responsible emergency call center.

8. The method according to one of the previous claims, **characterized in that** the sender (105) is provided in advance with several local key pairs each from a different local home network and/or **in that** it is determined in which local responsible home network the sender is located and the corresponding local keys are transmitted to the sender.

9. A sender arranged to securely transmit a message to a receiver by means of a communication link, the communication link comprising, at least in part, a non-terrestrial data link, the sender comprising:
• a processor adapted to generate a message for a non-terrestrial transceiver, the message comprising information about a termination point of the message and payload data;
• an encryption algorithm wherein the encryption algorithm is arranged to encrypt the message by a first key of a key pair which is provided by a service provider in advance while leaving at least the termination point information unencrypted;
• an antenna set up for sending the message to the non-terrestrial transceiver.

10. A communication system for securely transmitting a message from a sender to a receiver by means of a communication link, wherein the communication link comprises, at least in sections, a non-terrestrial data link, wherein the communication system is arranged to perform the method according to any one of claims 1 - 8.

## Patentansprüche

1. Verfahren zum sicheren Übertragen einer Nachricht von einem Sender an einen Empfänger mittels einer Kommunikationsverbindungsstrecke, wobei die Kommunikationsverbindungsstrecke mindestens zum Teil eine nicht-terrestrische Datenverbindungsstrecke (120) eines Drittpartei-Kommunikationsanbieters (130) umfasst, wobei das Verfahren die Schritte umfasst:
• Generieren, durch eine funktionale Servereinheit eines Dienstanbieters, eines Schlüsselpaars für die Nachricht und Verteilen eines ersten Schlüssels an den Empfänger und eines zweiten Schlüssels an den Terminierungspunkt;
• Generieren einer Nachricht (110) durch den Sender (105), wobei die Nachricht (110) mindestens Informationen über einen Terminierungspunkt (145, 115) der Nachricht (110) und Nutzlastdaten (310) aufweist;
• teilweises Verschlüsseln der Nachricht durch den Sender (105) unter Verwendung des ersten Schlüssels, wobei mindestens die Terminierungspunktinformationen unverschlüsselt belassen werden;
• Senden der verschlüsselten Nachricht (110) mittels des Senders (105) über eine nicht-terrestrische Datenverbindungsstrecke (120) an einen nicht-terrestrischen Sendeempfänger (125) eines Drittpartei-Kommunikationsbetreibers (130), wobei der nicht-terrestrische Sendeempfänger die Nachricht an das Netzwerk des Drittpartei-Kommunikationsbetreibers (130) weiterleitet;
• Weiterleiten der Nachricht an den Terminierungspunkt (145, 115), wobei der zweite Schlüssel bei dem Terminierungsendpunkt zum Verschlüsseln vorgehalten wird;
• mindestens teilweises Entschlüsseln der Nachricht bei dem Terminierungspunkt (145, 115) unter Verwendung des zweiten Schlüssels,
wobei der Terminierungspunkt (115, 145) eine Kommunikationsadresse einer Nachrichtenverarbeitungseinheit eines Heimnetzwerkbetreibers (160) ist,
wobei die Nachrichtenverarbeitungseinheit des Heimnetzwerkbetreibers (160) die Nachricht, die ein eCall ist, in verschlüsselter Form an eine lokale zuständige Leitstelle weiterleitet, die ein Empfänger (115, 150, 170) ist,
wobei der Heimnetzwerkbetreiber Standortinformationen von dem Sender auswertet, um die lokale zuständige Leitstelle zu bestimmen.

2. Verfahren nach Anspruch 1, **dadurch gekennzeichnet, dass** der Dienstanbieter der Heimnetzwerkbetreiber (160) ist, der die Schlüsselpaare generiert, verwaltet und/oder aktualisiert.

3. Verfahren nach einem der Ansprüche 1 bis 2, **dadurch gekennzeichnet, dass** die Kommunikationsadresse des Terminierungspunkts (115, 145) explizit in Standortdaten des Senders (105) spezifiziert ist, aus einer IMSI, einer MSISDN und/oder einer SIP URN bestimmt wird.

4. Verfahren nach einem der vorhergehenden Ansprüche, **dadurch gekennzeichnet, dass** die Informationen über den Terminierungspunkt (115, 145) auf manipulationssichere Weise übertragen werden.

5. Verfahren nach einem der vorhergehenden Ansprüche, **dadurch gekennzeichnet, dass** die Nachricht (110) Informationen über den Nachrichtentyp umfasst, wobei die Informationen über den Nachrichtentyp unverschlüsselt gesendet werden.

6. Verfahren nach einem der vorhergehenden Ansprüche, **dadurch gekennzeichnet, dass** der Sender (105) ein Fahrzeug, insbesondere ein Auto, ein Smartphone und/oder eine Smartwatch, ist.

7. Verfahren nach einem der vorhergehenden Ansprüche, **dadurch gekennzeichnet, dass** der Empfänger (115, 150, 170) eine zuständige Notrufzentrale ist.

8. Verfahren nach einem der vorhergehenden Ansprüche, **dadurch gekennzeichnet, dass** dem Sender (105) im Voraus mehrere lokale Schlüsselpaare bereitgestellt werden, jeder von einem anderen lokalen Heimnetzwerkbetreiber, und/oder dadurch, dass bestimmt wird, in welchem lokalen zuständigen Heimnetzwerk sich der Sender befindet, und die entsprechenden lokalen Schlüssel an den Sender übertragen werden.

9. Sender, der dazu angeordnet ist, eine Nachricht mittels einer Kommunikationsverbindungsstrecke an einen Empfänger zu übertragen, wobei die Kommunikationsverbindungsstrecke mindestens zum Teil eine nicht-terrestrische Datenverbindungsstrecke umfasst, wobei der Sender umfasst:
• einen Prozessor, der dazu angepasst ist, eine Nachricht für einen nicht-terrestrischen Sendeempfänger zu generieren, wobei die Nachricht Informationen über einen Terminierungspunkt der Nachricht und Nutzlastdaten umfasst;
• einen Verschlüsselungsalgorithmus, wobei der Verschlüsselungsalgorithmus dazu angepasst ist, die Nachricht mit einem ersten Schlüssel eines Schlüsselpaars zu verschlüsseln, das von einem Dienstanbieter im Voraus bereitgestellt wird, während mindestens die Terminierungspunktinformationen unverschlüsselt belassen werden;
• eine Antenne, die dazu eingerichtet ist, die Nachricht an den nicht-terrestrischen Sendeempfänger zu senden.

10. Kommunikationssystem zum sicheren Übertragen einer Nachricht von einem Sender an einen Empfänger mittels einer Kommunikationsverbindungsstrecke, wobei die Kommunikationsverbindungsstrecke mindestens in Abschnitten eine nicht-terrestrische Datenverbindungsstrecke umfasst, wobei das Kommunikationssystem dazu angeordnet ist, das Verfahren nach einem der Ansprüche 1 - 8 durchzuführen.

## Revendications

1. Procédé de transmission sécurisée d'un message d'un émetteur à un récepteur au moyen d'une liaison de communication, la liaison de communication comprenant, au moins en partie, une liaison de données non terrestre (120) d'un fournisseur de communication tiers (130), le procédé comprenant les étapes suivantes :
• la génération par une unité de serveur fonctionnel d'un fournisseur de service d'une paire de clés pour le message et la distribution d'une première clé au récepteur et d'une deuxième clé au point de terminaison ;
• la génération d'un message (110) par l'émetteur (105), le message (110) comportant au moins une information relative à un point de terminaison (145, 115) du message (110) et des données de charge utile (310) ;
• le cryptage partiel du message par l'émetteur (105) en utilisant la première clé, en laissant au moins l'information de point de terminaison non cryptée ;
• l'envoi du message crypté (110) au moyen de l'émetteur (105) via une liaison de données non terrestre (120) à un émetteur-récepteur non terrestre (125) d'une opérateur de communication tiers (130), l'émetteur-récepteur non terrestre transmettant le message au réseau de l'opérateur de communication tiers (130) ;
• la transmission du message au point de terminaison (145, 115), avec la deuxième clé détenue au niveau du point d'extrémité de terminaison pour le décryptage ;
• au moins un décryptage partiel du message au niveau du point de terminaison (145, 115) en utilisant la deuxième clé,
dans lequel le point de terminaison (115, 145) est une adresse de communication d'une unité de traitement de message d'un opérateur de réseau domestique (160),
dans lequel l'unité de traitement de message de l'opérateur de réseau domestique (160) transmet le message étant un eCall vers un centre de réception d'appels d'urgence (PSAP) responsable local étant un récepteur (115, 150, 170) sous une forme cryptée,
dans lequel l'opérateur de réseau domestique évalue les informations de localisation de l'émetteur pour déterminer le PSAP responsable local.

2. Procédé selon la revendication 1, **caractérisé en ce que** le fournisseur de service est l'opérateur de réseau domestique (160) qui génère, gère et/ou met à jour les paires de clés.

3. Procédé selon une quelconque des revendications 1 à 2, **caractérisé en ce que** l'adresse de communication du point de terminaison (115, 145) est spécifiée explicitement d'après les données de localisation de l'émetteur (105), depuis un IMSI, un MSISDN et/ou un SIP URN est déterminé.

4. Procédé selon une quelconque des revendications précédentes, **caractérisé en ce que** l'information relative au point de terminaison (115, 145) est transmise de manière inviolable.

5. Procédé selon une quelconque des revendications précédentes, **caractérisé en ce que** le message (110) comprend des informations relatives au type de message, dans lequel lesdites informations relatives au type de message sont envoyées non cryptées.

6. Procédé selon une quelconque des revendications précédentes, **caractérisé en ce que** l'émetteur (105) est un véhicule, en particulier une voiture, un smartphone et/ou une montre connectée.

7. Procédé selon une quelconque des revendications précédentes, **caractérisé en ce que** le récepteur (115, 150, 170) est un centre d'appels d'urgence responsable.

8. Procédé selon une quelconque des revendications précédentes, **caractérisé en ce que** l'émetteur (105) est doté à l'avance de plusieurs paires de clés locales chacune provenant d'un réseau domestique local différent et/ou **en ce qu'**il est déterminé dans quel réseau domestique responsable local l'émetteur est situé et les clés locales correspondantes sont transmises à l'émetteur.

9. Emetteur agencé pour transmettre de manière sécurisée un message à un récepteur au moyen d'une liaison de communication comprenant, au moins en partie, une liaison de données non terrestre, l'émetteur comprenant :
• un processeur adapté pour générer un message pour un émetteur-récepteur non terrestre, le message comprend des informations relatives à un point de terminaison du message et des données de charge utile ;
• un algorithme de cryptage dans lequel l'algorithme de cryptage est agencé pour crypter le message par une première clé d'une paire de clés qui est fournie à l'avance par un fournisseur de service, en laissant au moins l'information de point de terminaison non cryptée ;
• une antenne réglée pour envoyer le message à l'émetteur-récepteur non terrestre.

10. Système de communication pour transmettre de manière sécurisée un message d'un émetteur à un récepteur au moyen d'une liaison de communication, dans lequel la liaison de communication comprend, au moins en partie, une liaison de données non terrestre, dans lequel le système de communication est agencé pour mettre en œuvre le procédé selon une quelconque des revendications 1 à 8.
